# EUROPÄISCHE PATENTANMELDUNG

(11) **EP 2 136 106 A2**
(43) Veröffentlichungstag der Anmeldung: **23.12.2009**
(21) Anmeldenummer: 09159728.6
(22) Anmeldetag: 08.05.2009
(51) Int. Cl.: F16H 61/02

(54) **Verfahren zum Ansteuern eines automatischen Getriebes und Getriebesteuerung**

(30) Priorität: 16.06.2008 DE 102008002440
(71) Anmelder: ZF Friedrichshafen AG, 88038 Friedrichshafen (DE)
(72) Erfinder: Vesenjak, Andelko, 88074 Brochenzell (DE)

(57) **Zusammenfassung**

Es wird ein Verfahren zum Ansteuern eines automatischen Getriebes bei einem Nutzfahrzeug vorgeschlagen, bei dem über eine Getriebesteuerung eine Fahrstrategie vorgegeben wird, wobei die Fahrstrategie in Abhängigkeit von einem aktuell ermittelten Ladungszustand des Nutzfahrzeuges verändert wird. Ferner wird eine Getriebesteuerung für ein automatisiertes Getriebe eines Nutzfahrzeuges, insbesondere eines Containerfahrzeuges, mit einem Getriebesteuergerät zum Ansteuern des Getriebes im Rahmen einer vorgegebenen Fahrstrategie vorgeschlagen, wobei das Getriebesteuergerät mit einem Ladungserkennungsmodul zum Ermitteln des aktuellen Ladungszustandes gekoppelt ist.

## Beschreibung

Die vorliegende Erfindung betrifft ein Verfahren zum Ansteuern eines automatischen Getriebes bei einem Nutzfahrzeug gemäß der im Oberbegriff des Patentanspruches 1 näher definierten Art. Ferner betrifft die Erfindung eine Getriebesteuerung für ein automatisches Getriebe eines Nutzfahrzeuges gemäß der im Oberbegriff des Patentanspruches 6 näher definierten Art.

Unter automatischen Getrieben sind alle Arten von automatisch schaltenden Getrieben zu verstehen, beispielsweise Lastschaltgetriebe oder automatisierte Schaltgetriebe.

Aus der Fahrzeugtechnik ist es bekannt, dass Fahrzeuge, die häufig ihren Beladungszustand ändern, in einem für den jeweiligen Beladungszustand nicht korrekten Anfahrgang angefahren werden. Entweder ist der Anfahrgang zu hoch gewählt und damit die Kupplungsbelastung unnötig hoch oder der Anfahrgang ist zu klein gewählt und damit ergibt sich eine schlechte Anfahrleistung. Ähnliches ergibt sich für die Schaltpunkte beziehungsweise die gewählten Schaltdrehzahlen bei derartigen Fahrzeugen. Aus diesem Grund erfolgt üblicherweise eine Massenberechnung bei den Fahrzeugen mit automatisierten Getrieben, um die genannten Nachteile zu umgehen.

Beispielsweise ist aus der Druckschrift DE 10 2004 015 966 A1 ein Verfahren zur Anfahrgangbestimmung eines automatisierten Stufenwechselgetriebes bekannt. Bei dem bekannten Verfahren wird zur Bestimmung eines Anfahrganges die Fahrzeugmasse und die Fahrwegsteigung berücksichtigt. Beispielsweise kann ein höherer Anfahrgang dann benutzt werden, wenn die Fahrzeugmasse unter einem vorbestimmten Wert liegt. Die Fahrzeugmasse wird entweder im Betrieb des Fahrzeuges bestimmt oder abgeschätzt. Im Rahmen der Abschätzung der Fahrzeugmasse wird geprüft, ob die Dauer eines Fahrzeugstillstands kürzer ist, als ein die Fahrzeugmasse anfahrgangrelevant verändernder Ladevorgang am Fahrzeug dauern würde. Wenn dieser vorbestimmte Zeitraum verstrichen ist, so kann mit hoher Wahrscheinlichkeit davon ausgegangen werden, dass sich die Fahrzeugmasse durch einen Ladevorgang verändert hat. Die Abschätzung der Fahrzeugmasse ist jedoch relativ ungenau. Da auch die Berechnung der Fahrzeugmasse erst bei fahrendem Fahrzeug erfolgt, ist auch diese Art der Bestimmung der Fahrzeugmasse nicht ausreichend. Insbesondere bei Containerfahrzeugen, die ihre Container und damit die Zugmasse in kürzester Zeit häufig ändern, kann die Ansteuerung des Anfahrvorganges bei dem Fahrzeug mit der vorgenannten Fahrzeugmassenbestimmung nicht ausreichend beeinflusst werden.

Der vorliegenden Erfindung liegt die Aufgabe zu Grunde, ein Verfahren zum Ansteuern eines automatischen Getriebes bei einem Nutzfahrzeug und eine Getriebesteuerung vorzuschlagen, welche eine an die Beladung des Fahrzeuges angepasste Ansteuerung des Getriebes realisieren.

Die der Erfindung zu Grunde liegende Aufgabe kann durch ein Verfahren zum Ansteuern eines automatischen Getriebes bei einem Nutzfahrzeug gelöst werden, bei dem über eine Getriebesteuerung eine Fahrstrategie oder dergleichen vorgegeben wird, wobei die Fahrstrategie in Abhängigkeit von einem aktuell ermittelten Ladungszustand des Nutzfahrzeuges beeinflusst beziehungsweise verändert wird.

Unter automatischen Getrieben sind alle Arten von automatisch schaltenden Getrieben zu verstehen, beispielsweise Lastschaltgetriebe oder automatisierte Schaltgetriebe.

Durch das vorgeschlagene Verfahren können die sich bei den bekannten Verfahren ergebenden Nachteile bezüglich der Fahrzeugmassenberechnung auf einfachste Weise kompensiert werden, da eine Änderung bei der Beladung des Fahrzeuges sofort erkannt und somit sofort der richtige beziehungsweise daran angepasste Anfahrgang gewählt werden kann.

Beispielsweise kann der Anfahrgang in Abhängigkeit des ermittelten Ladungszustandes beziehungsweise Ladungszustandes derart verändert werden, dass bei einer großen Beladung ein entsprechend geringerer Anfahrgang und bei einer geringen Beladung ein entsprechend höherer Anfahrgang gewählt wird. Auf diese Weise kann die Lebensdauer der Anfahrkupplung deutlich erhöht werden, wenn zum Beispiel kürzere Anfahrübersetzungen bei einem oder mehreren Aufliegern oder Anhängern an dem Fahrzeug verwendet werden. Zudem können bessere Beschleunigungsleistungen bei dem Fahrzeug durch längere Anfahrübersetzungen realisiert werden, wenn das Fahrzeug keine oder nur eine geringe Beladung beziehungsweise keinen Auflieger oder Anhänger aufweist.

Gemäß einer nächsten Weiterbildung der Erfindung kann auch die Schaltdrehzahl in Abhängigkeit des ermittelten Ladungszustandes verändert werden. Dadurch kann eine Verbrauchsoptimierung bei dem Fahrzeug erreicht werden. Zudem können die Anzahl der Schaltungen reduziert werden, so dass die Lebensdauer der Aktorik, der Synchronisierung oder dergleichen verlängert wird.

Es ist auch möglich, dass bei dem erfindungsgemäßen Verfahren der Schaltzeitpunkt und/oder der Gangsprung in Abhängigkeit des ermittelten Ladungszustandes verändert wird. Somit können unterschiedliche Gangsprünge vorgesehen sein. Zudem kann der jeweilige Schaltzeitpunkt variiert werden.

Im Rahmen einer weiteren Ausführungsvariante der Erfindung kann vorgesehen sein, dass die Bremsstrategie in Abhängigkeit des ermittelten Ladungszustandes geändert wird. Beispielsweise können bei einer höheren Beladung die Rückschaltpunkte ebenfalls höher gesetzt werden. Es sind auch andere Bremsstrategien einsetzbar.

Die der Erfindung zu Grunde liegende Aufgabe kann auch durch eine Getriebesteuerung für ein automatisiertes Getriebe eines Nutzfahrzeuges, insbesondere eines Containerfahrzeuges, mit einem Getriebesteuergerät zum Ansteuern des Getriebes im Rahmen einer vorgegebenen Fahrstrategie gelöst werden, wobei das Getriebesteuergerät mit einem Ladungserkennungsmodul zum Ermitteln des aktuellen Ladungszustandes gekoppelt ist.

Auf diese Weise kann ein Ladungserkennungsmodul oder dergleichen in die Getriebesteuerung integriert werden, um sofort bei einer Veränderung der Beladung des Fahrzeuges eine entsprechende Anpassung der Fahrstrategie vornehmen zu können.

Als Ladungserkennungsmodul zum Erkennen einer Anzahl von geladenen Containern zum Beispiel bei einem Containerfahrzeug kann ein Schalter und/oder ein Näherungsschalter und/oder ein Schallsensor und/oder ein Laserschalter oder dergleichen verwendet werden. Auf diese Weise kann zum Beispiel bei dem Containerfahrzeug die Anzahl der Container ermittelt und die Informationen an die Getriebesteuerung beziehungsweise an das Getriebesteuergerät übermittelt werden.

Die Informationsübermittlung über den Ladungszustand des Fahrzeuges kann zum Beispiel über ein Fahrzeugnetzwerk, zum Beispiel dem CAN, oder auch über eine definierte Schnittstelle erfolgen. Als Schnittstelle kann zum Beispiel ein Elektronik-Modul (E-Modul) oder dergleichen verwendet werden. Das Modul kann digital oder auch analog die Informationen übermitteln.

Im Rahmen einer weiteren Ausführungsvariante der Erfindung kann vorgesehen sein, dass die Ladungserkennung mit einer Aufliegererkennung und/oder mit einer Sattelkupplungssignal-Erkennung kombiniert wird. Auf diese Weise kann das Ladungserkennungsmodul des Fahrzeuges weiter optimiert werden.

## Patentansprüche

1. Verfahren zum Ansteuern eines automatischen Getriebes bei einem Nutzfahrzeug, bei dem über eine Getriebesteuerung eine Fahrstrategie vorgegeben wird, **dadurch gekennzeichnet, dass** die Fahrstrategie in Abhängigkeit von einem aktuell ermittelten Ladungszustand des Nutzfahrzeuges verändert wird.

2. Verfahren nach Anspruch 1, **dadurch gekennzeichnet, dass** der Anfahrgang in Abhängigkeit des ermittelten Ladungszustandes verändert wird.

3. Verfahren nach Anspruch 1 oder 2, **dadurch gekennzeichnet, dass** die Schaltdrehzahl in Abhängigkeit des ermittelten Ladungszustandes verändert wird.

4. Verfahren nach einem der vorangehenden Ansprüche, **dadurch gekennzeichnet, dass** der Gangsprung in Abhängigkeit des ermittelten Ladungszustandes verändert wird.

5. Verfahren nach einem der vorangehenden Ansprüche, **dadurch gekennzeichnet, dass** die Bremsstrategie in Abhängigkeit des ermittelten Ladungszustandes verändert wird.

6. Getriebesteuerung für ein automatisches Getriebe eines Nutzfahrzeuges, insbesondere eines Containerfahrzeuges, mit einem Getriebesteuergerät zum Ansteuern des Getriebes im Rahmen einer vorgegebenen Fahrstrategie, **dadurch gekennzeichnet, dass** das Getriebesteuergerät mit zumindest einem Ladungserkennungsmodul zum Ermitteln des aktuellen Ladungszustandes gekoppelt ist.

7. Getriebesteuerung nach Anspruch 6, **dadurch gekennzeichnet, dass** als Ladungserkennungsmodul zum Erkennen der Anzahl von geladenen Containern ein Schalter und/oder ein Näherungsschalter und/oder ein Schallsensor und/oder ein Laserschalter vorgesehen ist.

8. Getriebesteuerung nach Anspruch 6 oder 7, **dadurch gekennzeichnet, dass** die Informationsübermittlung zwischen dem Getriebesteuergerät und dem Ladungserkennungsmodul über ein Fahrzeugnetzwerk oder eine definierte Schnittstelle vorgesehen ist.

9. Getriebesteuerung nach Anspruch 8, **dadurch gekennzeichnet, dass** als Schnittstelle ein digitales oder analoges Elektronik-Modul vorgesehen ist.

10. Getriebesteuerung nach einem der Ansprüche 6 bis 9, **dadurch gekennzeichnet, dass** das Getriebesteuergerät mit einer Aufliegererkennung und/oder Sattelkupplungssignal-Erkennung gekoppelt ist.
